# EUROPÄISCHE PATENTSCHRIFT

(11) **EP 2 588 361 B1**
(45) Veröffentlichungstag und Bekanntmachung des Hinweises auf die Patenterteilung: **27.05.2015**
(21) Anmeldenummer: 11726095.0
(22) Anmeldetag: 08.06.2011
(51) Int. Cl.: F16H 57/025, B62D 3/12

(54) **LENKGEHÄUSE FÜR EINE LENKEINRICHTUNG IN EINEM FAHRZEUG**
STEERING GEAR HOUSING FOR A STEERING UNIT IN A VEHICLE
CARTER DE DIRECTION POUR DISPOSITIF DE DIRECTION DANS UN VÉHICULE

(30) Priorität: 30.06.2010 DE 102010030737
(43) Veröffentlichungstag der Anmeldung: 08.05.2013
(73) Patentinhaber: Robert Bosch Automotive Steering GmbH, 73527 Schwäbisch Gmünd (DE)
(72) Erfinder: BIEBER, Jürgen, 73655 Plüderhausen (DE)
(86) Internationale Anmeldenummer: PCT/EP2011/059456
(87) Internationale Veröffentlichungsnummer: WO 2012/000748

(56) Entgegenhaltungen:
- WO-A1-90/05083
- DE-A1-102008 041 501
- JP-A- 2008 265 648

## Beschreibung

Die Erfindung bezieht sich auf ein Lenkgehäuse für eine Lenkeinrichtung in einem Fahrzeug nach dem Oberbegriff des Anspruches 1.

Bekannt sind Lenkeinrichtungen für Fahrzeuge, die zur Lenkunterstützung einen elektrischen Servomotor aufweisen, der über das Lenkgetriebe der Lenkeinrichtung ein unterstützendes Moment einspeist. Das Lenkgetriebe mit dem Lenkgestänge ist in einem Lenkgehäuse aufgenommen, welches zur Gewichtsreduzierung beispielsweise aus Aluminium besteht, wobei aus Stabilitätsgründen an der Außenseite eines Gehäuserohres des Lenkgehäuses, in welchem ein Gestängeteil aufgenommen ist, Verstärkungsrippen bzw. -streben angeordnet sein können. Um die bei sicherheitsrelevanten Bauteilen vorgeschriebenen Steifigkeiten und Festigkeiten zu erreichen, sind die Verstärkungsstreben üblicherweise großzügig dimensioniert, was sich jedoch negativ auf das Gewicht des Lenkgehäuses auswirkt.

Die JP 2008265648 A zeigt ein Lenkgehäuse für eine Lenkeinrichtung, das ausweislich Fig. 2 ein Gehäuserohr aufweist, in dem eine Lenkzahnstange verschieblich geführt wird, die mit der Lenkwelle kämmt. Am Gehäuserohr sind benachbart zur Lenkwelle Verstärkungsstreben angeordnet, die sich auf diametral gegenüberliegenden Seiten am Gehäuserohr befinden und sich jeweils in Radialrichtung erstrecken. Die Verstärkungsstreben erstrecken sich axial über den größten Teil des Gehäuserohrs. Auf der der Lenkwelle axial gegenüberliegenden Seite sind keine Verstärkungsstreben vorgesehen.

Der Erfindung liegt die Aufgabe zu Grunde, ein Lenkgehäuse für eine Lenkeinrichtung in einem Fahrzeug mit einfachen konstruktiven Maßnahmen mit hoher Steifigkeit bei reduziertem Gewicht auszubilden.

Diese Aufgabe wird erfindungsgemäß mit den Merkmalen des Anspruches 1 gelöst. Die Unteransprüche geben zweckmäßige Weiterbildungen an.

Das erfindungsgemäße Lenkgehäuse ist Bestandteil einer Lenkeinrichtung in einem Fahrzeug, beispielsweise in einem Personenwagen oder einem Nutzfahrzeug, und weist zumindest ein Gehäuserohr auf, welches zur Aufnahme eines Gestängeteils vorgesehen ist. An der Außenseite des Gehäuserohrs befinden sich Verstärkungsstreben, die dem Lenkgehäuse eine erhöhte Steifigkeit verleihen. Das Lenkgehäuse besteht vorzugsweise aus Leichtmetall wie zum Beispiel Aluminium oder Magnesium und kann im Spritzgieß-Verfahren hergestellt werden. In Betracht kommen aber auch Kunststoffgehäuse mit eingespritzten Verstärkungsrippen bzw. -streben aus Metall, insbesondere Stahl.

Erfindungsgemäß ist vorgesehen, dass sich bezogen auf das geradlinige Gehäuserohr benachbart zu den beiden gegenüberliegenden Enden des Gehäuserohrs jeweils zwei sich in verschiedene radiale Richtungen erstreckende Verstärkungsstreben vorgesehen sind, die mit zunehmendem Abstand zur axialen Rohrmitte eine sich vergrößernde radiale Erstreckung aufweisen. Jeweils zwei gegenüberliegende Verstärkungsstreben werden von einer gemeinsamen Begrenzungsebene begrenzt, die bezogen auf eine Mittelebene durch das Gehäuserohr winklig verläuft. An jedem Rohrende sind mindestens zwei zueinander winkelversetzte Verstärkungsstreben angeordnet, wobei jeweils zwei sich gegenüberliegende Verstärkungsstreben einander zugeordnet und von einer gemeinsamen Begrenzungsebene begrenzt sind. Somit bestehen zumindest zwei Begrenzungsebenen, welche sich erfindungsgemäß in Höhe des Gehäuserohrs schneiden.

Die in dieser Weise ausgebildeten Verstärkungsstreben erstrecken sich bezogen auf das Gehäuserohr über Kreuz, was trotz eines begrenzten Materialeinsatzes zu einer signifikanten Steifigkeitserhöhung führt. Jeweils zwei an gegenüberliegenden Enden des Gehäuserohrs angeordnete Verstärkungsstreben liegen über Kreuz, was zu dem Schnittpunkt der Begrenzungsebenen in Höhe des Gehäuserohres führt. Der Schnittpunkt liegt hierbei innerhalb des Außenumfangs des Gehäuserohrs, beispielsweise zumindest annähernd in der radialen Mitte des Gehäuserohrs.

Gemäß einer weiteren zweckmäßigen Ausführung ist vorgesehen, dass benachbart zu den beiden gegenüberliegenden Enden des Gehäuserohrs jeweils vier sich in verschiedene radiale Richtungen sich erstreckende Verstärkungsstreben angeordnet sind. Jeweils zwei gegenüberliegende, über Kreuz angeordnete Verstärkungsstreben sind von einer gemeinsamen Begrenzungsebene begrenzt. Somit gibt es insgesamt mindestens acht Verstärkungsstreben, von denen jeweils zwei sich gegenüberliegende Verstärkungsstreben über eine gemeinsame Begrenzungsebene begrenzt sind. Demzufolge können vier Begrenzungsebenen definiert werden, von denen sich zumindest zwei Begrenzungsebenen in Höhe des Gehäuserohrs schneiden. Bevorzugt schneiden sich von den vier Begrenzungsebenen jeweils zwei in einem Punkt in Höhe des Gehäuserohrs, wobei die Schnittpunkte von jeweils zwei Begrenzungsebenen nicht notwendigerweise zusammenfallen, auch wenn dies möglich ist.

Über die Definition der Begrenzungsebenen steht ein Instrumentarium für die Auslegung des Lenkgehäuses zur Verfügung, bei dem eine hohe Steifigkeit und Festigkeit des Lenkgehäuses mit minimalem Materialaufwand gewährleistet werden kann.

Es kann zweckmäßig sein, die von einer gemeinsamen Begrenzungsebene begrenzten und auf gegenüberliegenden Seiten des Gehäuserohrs angeordneten Verstärkungsstreben in Umfangsrichtung versetzt zueinander anzuordnen. Grundsätzlich genügt es aber, die Verstärkungsstreben an axial gegenüberliegenden Enden sowie auf radial gegenüberliegenden Seiten so anzuordnen, däss die Ebenen, in der beiden zugeordneten Verstärkungsstreben liegen, zusammenfallen. Bei einer in Umfangsrichtung versetzten Positionierung der Verstärkungsstreben liegen dagegen die Ebenen durch die Verstärkungsstreben entweder parallel zueinander oder schließen einen Winkel ein.

In bevorzugter Ausführung sind die Verstärkungsstreben in sich zumindest annähernd eben ausgebildet, wobei grundsätzlich auch gebogene, geschwungene bzw. konvex oder konkav gewölbte Ausführungsvarianten in Betracht kommen. Des Weiteren ist es möglich, die Verstärkungsstreben über ihre axiale und/oder radiale Erstreckung mit einer sich ändernden Wandstärke auszubilden. Gemäß einer anderen Ausführung ist es dagegen zweckmäßig, entweder in Achsrichtung oder in Radialrichtung oder in beide Richtungen eine konstante Wandstärke vorzusehen.

Um einen minimalen Materialeinsatz realisieren zu können, ist es vorteilhaft, dass ein mittlerer axialer Abschnitt des Gehäuserohrs entweder vollständig ohne Verstärkungsstreben ausgebildet ist oder in der Weise ausgeführt ist, dass die Verstärkungsstreben in diesem Abschnitt auf ein Minimum reduziert sind. So können die Verstärkungsstreben oder Rippen in diesem Abschnitt eine konstante radiale Höhe aufweisen, die sich erst im Übergang zu den endseitigen Verstärkungsstreben erhöht. Als Lenkeinrichtung kommt insbesondere ein Lenksystem mit elektromotorischer Servounterstützung in Betracht. Grundsätzlich möglich ist aber auch eine Anwendung des Lenkgehäuses auf Lenksysteme mit hydraulischer Servounterstützung.

Des Weiteren ist es möglich, das Lenkgehäuse in einem aktiven Lenksystem einzusetzen, bei dem ein Zusatzlenkwinkel erzeugbar ist, welcher dem vom Fahrer vorgegebenen Lenkwinkel überlagerbar ist.

Weitere Vorteile und zweckmäßige Ausführungen sind den weiteren Ansprüchen, der Figurenbeschreibung und den Zeichnungen zu entnehmen. Es zeigen:

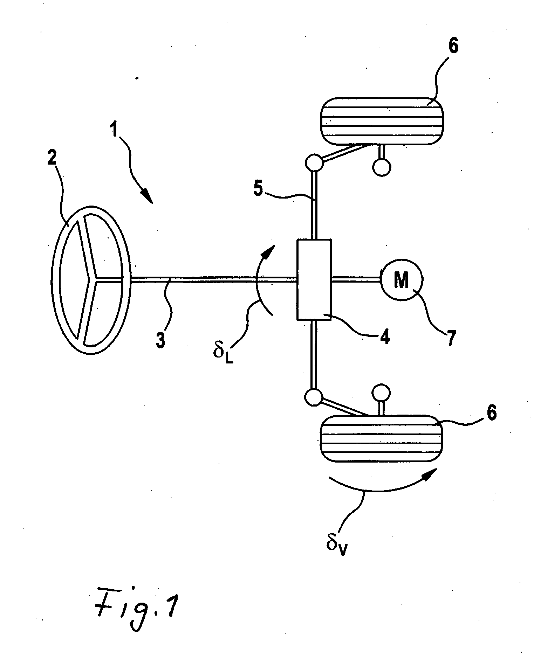

Fig. 1 eine schematische Darstellung einer Lenkeinrichtung in einem Fahrzeug,
Fig. 2 ein Lenkgehäuse der Lenkeinrichtung in Seitenansicht,
Fig. 3 das Lenkgehäuse in einer um 90° verdrehten Darstellung,
Fig. 4 bis 6 das Lenkgehäuse in verschiedenen perspektivischen Ansichten.

In den Figuren sind gleiche Bauteile mit gleichen Bezugszeichen versehen.

Die Lenkeinrichtung 1 umfasst ein Lenkrad 2, eine Lenkspindel bzw. -welle 3, ein Lenkgehäuse 4 mit einem darin aufgenommenen Lenkgetriebe und ein Lenkgestänge 5, über das eine Lenkbewegung auf die lenkbaren Räder 6 des Fahrzeugs übertragen wird. Der Fahrer gibt über das Lenkrad 2, mit dem die Lenkspindel 3 fest verbunden ist, einen Lenkwinkel δ_{L} vor, der im Lenkgetriebe im Lenkgehäuse 4 auf eine Zahnstange des Lenkgestänges 5 übertragen wird, woraufhin sich an den lenkbaren Rädern 6 ein Radlenkwinkel δ_{V} einstellt.

Zur Unterstützung des vom Fahrer aufgebrachten Handmoments ist ein elektrischer Servomotor 7 vorgesehen, über den ein Servomoment zur Unterstützung in das Lenkgetriebe im Lenkgehäuse 4 eingespeist werden kann. Anstelle eines elektrischen Servomotors kann auch eine hydraulische Unterstützungseinrichtung vorgesehen sein, beispielsweise eine Hydraulikpumpe, die durch einen Verbrennungsmotor angetrieben wird und ein hydraulisches Lenksystem speist.

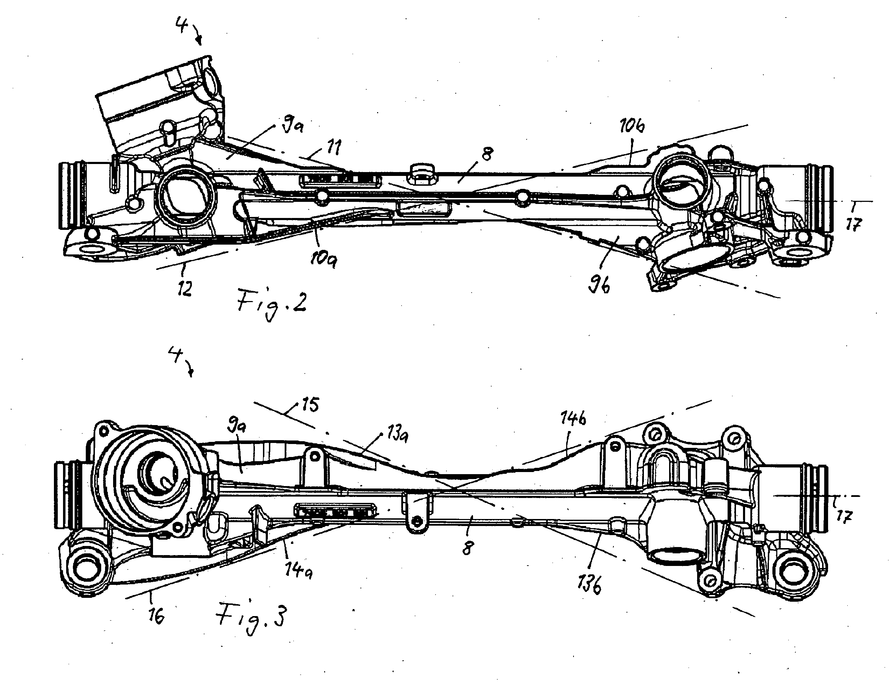

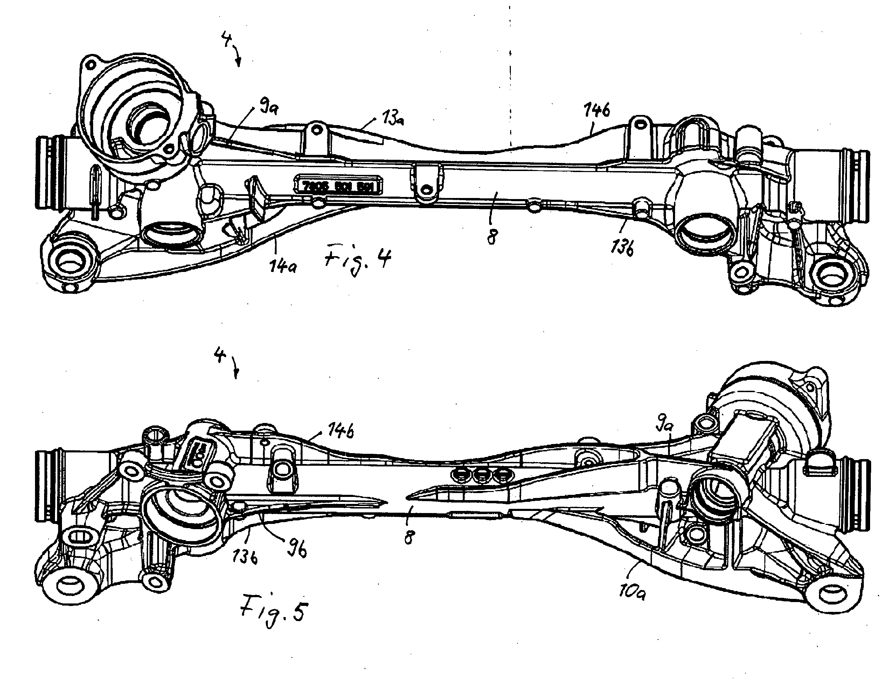

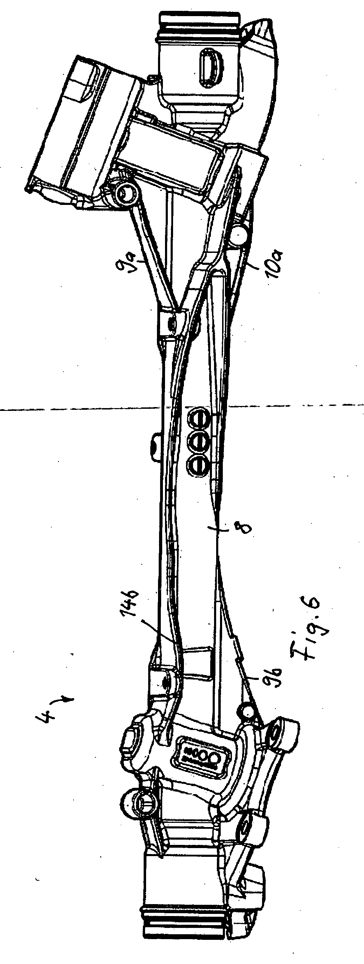

In den folgenden Figuren 2 bis 6 ist das Lenkgehäuse 4 in Einzeldarstellung in verschiedenen Ansichten gezeigt. Das Lenkgehäuse 4 umfasst ein hohlzylindrisches Gehäuserohr 8 zur Aufnahme eines Gestängeteils des Lenkgestänges 5. Das Gehäuserohr 8 des als Aluminium-Spritzgießteil hergestellten Lenkgehäuses 4 weist auf der Außenseite mehrere Verstärkungsstreben bzw. -rippen 9a, 9b, 10a, 10b, 13a, 13b, 14a, 14b auf, die einteilig mit dem Gehäuseröhr 8 bzw. dem Lenkgehäuse ausgebildet sind und diesem eine erhöhte Steifigkeit verleihen. Die Verstärkungsstreben befinden sich benachbart zum jeweiligen Ende des Gehäuserohrs 8, sie können jedoch zur jeweiligen Stirnseite des Gehäuserohrs 8 einen axialen Abstand aufweisen. Die Verstärkungsstreben besitzen über ihre axiale Länge eine sich ändernde radiale Erstreckung, welche in Richtung zur Stirnseite des Gehäuserohrs zunimmt. Die Außenkante der Verstärkungsstreben kann, wie beispielsweise den Verstärkungsstreben 9a, 10a (Fig. 2) bzw. 14a, 13b (Fig. 3) zu entnehmen, geradlinig ausgeführt sein. Möglich ist aber auch ein gekrümmter Verlauf in konvexer oder konkaver Ausführung (Verstärkungsstreben 13a, 14b, dargestellt in Fig. 3) oder ein Verlauf mit wechselnden geradlinigen bzw. gekrümmten Abschnitten, so wie dies beispielhaft für die Verstärkungsstreben 9b, 10b in Fig. 2 dargestellt ist.

Wie den beiden um 90° zueinander verschwenkten Ansichten der Figuren 2 und 3 zu entnehmen, befinden sich an jedem Ende des Gehäuserohrs 8 jeweils vier Verstärkungsstreben 9a, 10a, 13a, 14a bzw. 9b, 10b, 13b, 14b, wobei die Verstärkungsstreben an einem Ende des Gehäuserohrs zueinander jeweils um etwa 90° versetzt angeordnet sind. Jeder Verstärkungsstrebe im Bereich eines ersten Endes des Gehäuserohrs 8 ist eine diagonal bzw. über Kreuz gegenüberliegende Verstärkungsstrebe im Bereich des zweiten Endes des Gehäuserohrs zugeordnet. Dadurch ergeben sich Paare von Verstärkungsstreben 9a-9b, 10a-10b, 13a-13b und 14a-14b. Jeweils zwei von in dieser Weise einander zugeordneten Verstärkungsstreben werden von einer Begrenzungsebene 11, 12, 15 bzw. 16 nach außen hin begrenzt. So ist den Verstärkungsstreben 9a und 9b die Begrenzungsebene 11, den Verstärkungsstreben 10a und 10b die Begrenzungsebene 12, den Verstärkungsstreben 13a und 13b die Begrenzungsebene 15 und den Verstärkungsstreben 14a und 14b die Begrenzungsebene 16 zugeordnet. Die Begrenzungsebenen 11 und 12 (Fig. 2) begrenzen hierbei die Verstärkungsstreben-Paare 9a, 9b, 10a, 10b, von denen die Verstärkungsstreben 9a und 10a bzw. 9b und 10b an jeweils einem Ende des Gehäuseröhrs 8 auf gegenüberliegenden Seiten des Gehäuserohrs angeordnet sind. Gleiches gilt für die Begrenzuhgsebenen 15 und 16, welche auf je einer Seite des Gehäuserohrs 8 einander gegenüberliegende Verstärkungsstreben 13a, 14a bzw. 13b, 14b begrenzen (Fig.3).

Die beiden Begrenzungsebenen 11 und 12 der gegenüberliegenden Verstärkungsstreben bilden hierbei einen Schnittpunkt, welcher innerhalb der Umrandung des Gehäuserohrs 8 liegt. In entsprechender Weise bilden die Begrenzungsebenen 15 und 16, welche gegenüber den Begrenzungsebenen 11 und 12 um 90° versetzt sind, einen Schnittpunkt, welcher ebenfalls innerhalb der Umrandung des Gehäuserohrs 8 liegt. Der Begriff "Schnittpunkt" ist in diesem Zusammenhang in der Weise zu verstehen, dass die von sich schneidenden Begrenzungsebenen gebildete Schnittlinie in Querrichtung durch das Gehäuserohr 8 geführt ist und somit innerhalb des Gehäuserohrs 8 ein Abschnitt der Schnittlinie mit einer Reihe von Schnittpunkten existiert..

Die Begrenzungsebenen schließen mit der Rohrachse 17 des geradlinig ausgeführten Gehäuserohrs 8 einen Winkel ein, der bei sämtlichen Begrenzungsebenen 11, 12, 15, 16 zumindest annähernd gleich ist und in einem Winkelbereich von maximal 30°, insbesondere bei annähernd 20° liegt. Der Schnittpunkt bzw. die Schnittlinie von je zwei sich schneidenden Begrenzungsebenen 11, 12 bzw. 15, 16 liegt zumindest annähernd auf der Rohrachse 17 bzw. kann gegebenenfalls, wie in Fig. 3 dargestellt, geringfügig gegenüber der Rohrachse 17 radial verschoben sein.

### Bezugszeichenliste

- 1: Lenkeinrichtung
- 2: Lenkrad
- 3: Lenkwelle
- 4: Lenkgehäuse
- 5: Lenkgestänge
- 6: Vorderrad
- 7: elektrischer Servomotor
- 8: Gehäuserohr
- 9a, 9b: Verstärkungsstrebe
- 10a, 10b: Verstärkungsstrebe
- 11: Begrenzungsebene
- 12: Begrenzungsebene
- 13a, 13b: Verstärkungsstrebe
- 14a, 14b: Verstärkungsstrebe
- 15: Begrenzungsebene
- 16: Begrenzungsebene
- 17: Rohrachse

## Patentansprüche

1. Lenkgehäuse für eine Lenkeinrichtung (1) in einem Fahrzeug, mit einem Gehäuserohr (8) zur Aufnahme eines Gestängeteils und mit Verstärkungsstreben (9a, 9b, 10a, 10b, 13a, 13b, 14a, 14b) an der Außenseite des Gehäuserohrs (8),
**dadurch gekennzeichnet,**
**dass** benachbart zu den beiden gegenüberliegenden Enden des Gehäuserohrs (8) jeweils mindestens zwei sich in verschiedene radiale Richtungen erstreckende Verstärkungsstreben (9a, 9b, 10a, 10b, 13a, 13b, 14a, 14b) angeordnet sind, und dass jeweils zwei an gegenüberliegenden Enden des Gehäuserohrs (8) angeordnete Verstärkungsstreben (9a, 9b, 10a, 10b, 13a, 13b, 14a, 14b) von je einer bezogen auf die Rohrachse (17) durch das Gehäuserohr (8) winklig liegenden Begrenzungsebene (11, 12, 15, 16) begrenzt sind, wobei mindestens zwei Begrenzungsebenen (11, 12, 15, 16) sich in Höhe des Gehäuserohrs (8) schneiden.

2. Lenkgehäuse nach Anspruch 1,
**dadurch gekennzeichnet,**
**dass** benachbart zu den beiden gegenüberliegenden Enden des Gehäuserohrs (8) jeweils vier sich in verschiedene radiale Richtungen erstreckende Verstärkungsstreben (9a, 9b, 10a, 10b, 13a, 13b, 14a, 14b) angeordnet und jeweils zwei gegenüberliegende Verstärkungsstreben (9a, 9b, 10a, 10b, 13a, 13b, 14a, 14b) von einer gemeinsamen Begrenzungsebene (11, 12, 15, 16) begrenzt sind.

3. Lenkgehäuse nach Anspruch 1 oder 2,
**dadurch gekennzeichnet,**
**dass** die von einer gemeinsamen Begrenzungsebene (11, 12, 15, 16) begrenzten, auf gegenüberliegenden Seiten des Gehäuserohrs (8) angeordneten Verstärkungsstreben (9a, 9b, 10a, 10b, 13a, 13b, 14a, 14b) in Umfangsrichtung versetzt zueinander angeordnet sind.

4. Lenkgehäuse nach einem der Ansprüche 1 bis 3,
**dadurch gekennzeichnet,**
**dass** die Verstärkungsstreben (9a, 9b, 10a, 10b, 13a, 13b, 14a, 14b) über ihre Länge eine sich ändernde Wandstärke aufweisen.

5. Lenkgehäuse nach einem der Ansprüche 1 bis 4,
**dadurch gekennzeichnet,**
**dass** die Verstärkungsstreben (9a, 9b, 10a, 10b, 13a, 13b, 14a, 14b) in sich zumindest annähernd eben ausgebildet sind.

6. Lenkgehäuse nach Anspruch 5,
**dadurch gekennzeichnet,**
**dass** die sich gegenüberliegenden, von einer gemeinsamen Begrenzungsebene (11, 12, 15, 16) begrenzten Verstärkungsstreben (9a, 9b, 10a, 10b, 13a, 13b, 14a, 14b) in parallelen Ebenen liegen.

7. Lenkgehäuse nach einem der Ansprüche 1 bis 6,
**gekennzeichnet durch** eine Ausführung aus Leichtmetall, insbesondere Aluminium.

8. Lenkgehäuse nach einem der Ansprüche 1 bis 7,
**dadurch gekennzeichnet,**
**dass** in einem mittleren Abschnitt des Gehäuserohrs (8) die Verstärkungsstreben (9a, 9b, 10a, 10b, 13a, 13b, 14a, 14b) auf ein Minimum reduziert sind.

9. Lenkgehäuse nach einem der Ansprüche 1 bis 8,
**dadurch gekennzeichnet,**
**dass** die Verstärkungsstreben (9a, 9b, 10a, 10b, 13a, 13b, 14a, 14b) mit zunehmendem Abstand zur axialen Rohrmitte eine größere radiale Erstreckung aufweisen.

10. Lenkeinrichtung mit einem Lenkgehäuse (4) nach einem der Ansprüche 1 bis 9.

## Claims

1. Steering gear housing for a steering unit (1) in a vehicle, having a housing tube (8) for accommodating a linkage part and having reinforcement struts (9a, 9b, 10a, 10b, 13a, 13b, 14a, 14b) on the outer side of the housing tube (8),
**characterized**
**in that**, adjacent to the two opposite ends of the housing tube (8), there are arranged in each case at least two reinforcement struts (9a, 9b, 10a, 10b, 13a, 13b, 14a, 14b) which extend in different radial directions, and in that in each case two reinforcement struts (9a, 9b, 10a, 10b, 13a, 13b, 14a, 14b) arranged at opposite ends of the housing tube (8) are delimited by in each case one delimiting plane (11, 12, 15, 16) which lies at an angle with respect to the tube axis (17) through the housing tube (8), wherein at least two delimiting planes (11, 12, 15, 16) intersect at the level of the housing tube (8).

2. Steering gear housing according to Claim 1,
**characterized**
**in that**, adjacent to the two opposite ends of the housing tube (8), there are arranged in each case four reinforcement struts (9a, 9b, 10a, 10b, 13a, 13b, 14a, 14b) which extend in different radial directions, and in each case two opposite reinforcement struts (9a, 9b, 10a, 10b, 13a, 13b, 14a, 14b) are delimited by a common delimiting plane (11, 12, 15, 16).

3. Steering gear housing according to Claim 1 or 2,
**characterized**
**in that** the reinforcement struts (9a, 9b, 10a, 10b, 13a, 13b, 14a, 14b) which are delimited by a common delimiting plane (11, 12, 15, 16) and which are arranged on opposite sides of the housing tube (8) are arranged offset with respect to one another in a circumferential direction.

4. Steering gear housing according to one of Claims 1 to 3,
**characterized**
**in that** the reinforcement struts (9a, 9b, 10a, 10b, 13a, 13b, 14a, 14b) have a varying wall thickness over their length.

5. Steering gear housing according to one of Claims 1 to 4,
**characterized**
**in that** the reinforcement struts (9a, 9b, 10a, 10b, 13a, 13b, 14a, 14b) are, in themselves, of at least approximately planar form.

6. Steering gear housing according to Claim 5,
**characterized**
**in that** the oppositely situated reinforcement struts (9a, 9b, 10a, 10b, 13a, 13b, 14a, 14b) which are delimited by a common delimiting plane (11, 12, 15, 16) lie in parallel planes.

7. Steering gear housing according to one of Claims 1 to 6,
**characterized by** being formed from light metal, in particular aluminium.

8. Steering gear housing according to one of Claims 1 to 7,
**characterized**
**in that** the reinforcement struts (9a, 9b, 10a, 10b, 13a, 13b, 14a, 14b) are reduced to a minimum in a central section of the housing tube (8).

9. Steering gear housing according to one of Claims 1 to 8,
**characterized**
**in that** the reinforcement struts (9a, 9b, 10a, 10b, 13a, 13b, 14a, 14b) have a radial extent which becomes larger with increasing distance from the axial centre of the tube.

10. Steering unit having a steering gear housing (4) according to one of Claims 1 to 9.

## Revendications

1. Carter de direction pour un dispositif de direction (1) dans un véhicule, comprenant un tube de carter (8) pour recevoir une partie de tringlerie et comprenant des entretoises de renforcement (9a, 9b, 10a, 10b, 13a, 13b, 14a, 14b) sur le côté extérieur du tube de carter (8),
**caractérisé en ce**
**qu'**au moins deux entretoises de renforcement (9a, 9b, 10a, 10b, 13a, 13b, 14a, 14b) respectives s'étendant dans différentes directions radiales sont disposées de manière adjacente aux deux extrémités opposées du tube de carter (8), et en ce que deux entretoises de renforcement (9a, 9b, 10a, 10b, 13a, 13b, 14a, 14b) respectives disposées à des extrémités opposées du tube de carter (8) sont délimitées par un plan de délimitation (11, 12, 15, 16) respectif situé suivant un angle par rapport à l'axe du tube (17) à travers le tube de carter (8), au moins deux plans de délimitation (11, 12, 15, 16) se croisant à hauteur du tube de carter (8).

2. Carter de direction selon la revendication 1,
**caractérisé en ce que**
quatre entretoises de renforcement (9a, 9b, 10a, 10b, 13a, 13b, 14a, 14b) respectives s'étendant dans différentes directions radiales sont disposées de manière adjacente aux deux extrémités opposées du tube de carter (8), et deux entretoises de renforcement opposées (9a, 9b, 10a, 10b, 13a, 13b, 14a, 14b) respectives sont délimitées par un plan de délimitation commun (11, 12, 15, 16).

3. Carter de direction selon la revendication 1 ou 2,
**caractérisé en ce que**
les entretoises de renforcement (9a, 9b, 10a, 10b, 13a, 13b, 14a, 14b) délimitées par un plan de délimitation commun (11, 12, 15, 16) et disposées sur des côtés opposés du tube de carter (8) sont disposées de manière décalée les unes par rapport aux autres dans la direction périphérique.

4. Carter de direction selon l'une quelconque des revendications 1 à 3,
**caractérisé en ce que**
les entretoises de renforcement (9a, 9b, 10a, 10b, 13a, 13b, 14a, 14b) présentent une épaisseur de paroi qui varie sur leur longueur.

5. Carter de direction selon l'une quelconque des revendications 1 à 4,
**caractérisé en ce que**
les entretoises de renforcement (9a, 9b, 10a, 10b, 13a, 13b, 14a, 14b) sont réalisées de manière au moins approximativement plane en soi.

6. Carter de direction selon la revendication 5,
**caractérisé en ce que**
les entretoises de renforcement opposées (9a, 9b, 10a, 10b, 13a, 13b, 14a, 14b) délimitées par un plan de délimitation commun (11, 12, 15, 16) se situent dans des plans parallèles.

7. Carter de direction selon l'une quelconque des revendications 1 à 6,
**caractérisé par** une réalisation en métal léger, en particulier en aluminium.

8. Carter de direction selon l'une quelconque des revendications 1 à 7,
**caractérisé en ce que**
les entretoises de renforcement (9a, 9b, 10a, 10b, 13a, 13b, 14a, 14b) sont réduites à un minimum dans une portion centrale du tube de carter (8).

9. Carter de direction selon l'une quelconque des revendications 1 à 8,
**caractérisé en ce que**
les entretoises de renforcement (9a, 9b, 10a, 10b, 13a, 13b, 14a, 14b) présentent une plus grande étendue radiale au fur et à mesure que la distance par rapport au centre axial du tube augmente.

10. Dispositif de direction comprenant un carter de direction (4) selon l'une quelconque des revendications 1 à 9.
